# EUROPEAN PATENT SPECIFICATION

(11) **EP 3 394 922 B1**
(45) Date of publication and mention of the grant of the patent: **11.10.2023**
(21) Application number: 16822168.7
(22) Date of filing: 22.12.2016
(51) Int. Cl.: C25B 1/04, C25B 5/00, B01D 53/32, C01B 3/38, H01M 8/0656, H01M 8/0662, H01M 8/0637, H01M 16/00, H01M 8/12

(54) **PROCESS AND AN APPARATUS FOR THE PRODUCTION OF COMPRESSED HYDROGEN**
VERFAHREN UND VORRICHTUNG ZUR HERSTELLUNG VON KOMPRIMIERTEM WASSERSTOFF
PROCÉDÉ ET APPAREIL POUR LA PRODUCTION D'HYDROGÈNE COMPRIMÉ

(30) Priority: 24.12.2015 EP 15202758
(43) Date of publication of application: 31.10.2018
(73) Proprietor: Shell Internationale Research Maatschappij B.V., 2596 HR The Hague (NL)
(72) Inventor: LOUIS, Jurgen, Johannes, Jacobus, 21107 Hamburg (DE)
(74) Representative: Shell Legal Services IP
(86) International application number: PCT/EP2016/082368
(87) International publication number: WO 2017/109065

(56) References cited:
- US-A1- 2001 033 954
- US-A1- 2004 013 923
- US-A1- 2004 202 914
- US-A1- 2006 054 512
- US-A1- 2008 057 359
- US-A1- 2008 292 921
- US-A1- 2010 266 923

## Description

### Field of the Invention

This invention relates to a process and an apparatus for the production of compressed hydrogen.

### Background of the Invention

In recent years, the interest in developing and using hydrogen-powered vehicles as a means of reducing, at their point of use, pollutants and greenhouse gases has gained momentum.

Hydrogen-powered vehicles deploy hydrogen fuel cells, which convert the chemical energy stored in the H-H bond of hydrogen gas to electrical energy. The electrical energy is then supplied to an electrical motor, which propels the vehicle.

Although the technology underpinning hydrogen fuel cells has had a number of decades to develop such that operating models are produced and installed in hydrogen-powered vehicles, the growth in the use of such vehicles is held back by the lack of a hydrogen supply infrastructure and/or the lack of hydrogen distribution networks.

For example, in 2015, there were only 18 public hydrogen refuelling stations in Germany. Although this figure expected to rise to around 400 as a result of the currently running `Hydrogen Mobility' project in the next 5 to 10 years, substantial challenges still remain, especially concerning, for example (i) the availability of the means of moving hydrogen from its production site to the end-user sites (e.g. refuelling stations), (ii) the energy demand associated with compressing hydrogen gas, (iii) the behaviour of compressed hydrogen gas during refuelling, as well as (iv) the accuracy metering the supply of hydrogen gas.

The root cause of many of these challenges is the inherent physical properties of hydrogen, the lightest element. Regarding these, for illustration purposes and without being bound to any particular theory, the low energy content of hydrogen per unit mass (as compared to gasoline for example) requires it to be delivered to vehicles at high pressure, however the resultant pressure changes which are then encountered during vehicle refuelling causes the hydrogen, and ultimately the fuel tank of the receiving vehicle, to heat up to unacceptable temperatures. This is due to the effect of the thermodynamic properties of hydrogen, firstly during the phenomena of `throttling' (i.e. expansion of the high pressure hydrogen gas as it enters, via an aperture, into the low pressure environment of the fuel tank); and secondly due to the compression of the supplied hydrogen during its accumulation in the fuel tank.

Further, unlike for electricity or natural gas, no large scale distribution and supply network exists anywhere in the world to convey hydrogen from a high capacity production site to refuelling stations, or to other end-users. Furthermore, due to its low density, even at elevated pressures, distribution of hydrogen in trucks is expensive and energy intensive. One way to address this distribution problem is to produce the required hydrogen on-site at each refuelling station. Such on-site hydrogen production may be carried out, for example, by electrolysis of water using electricity, or by steam reforming of methane or other hydrocarbons.

The major advantage of electrolysis is its ability to produce high purity hydrogen gas. It has the further advantages that the necessary hardware, and the supply of water and electricity, are readily available. However, the process can be slower than other methods of hydrogen production, and it is energy intensive, requiring about 52 kWh/kgH₂ of electricity.

Further, to refuel vehicles, hydrogen is required to be at a pressure of around 70 MPa for light vehicles and around 35 MPa for buses. This is set by, for example, the Society of Automotive Engineers (SAE) J2601 2014 protocol. This means that hydrogen produced by electrolysis needs to be mechanically compressed. Due to hydrogen's low molecular weight and inherent physical properties, mechanical compression is a further energy-demanding part of the overall process.

So, unless hydrogen production by electrolysis can be carried out more energy efficiently, electrolysis can be a costly way of producing per unit mass of hydrogen.

Steam reforming of methane, natural gas or other hydrocarbons is another method available for hydrogen production. It can have a high capital cost, but it can produce higher volumes of hydrogen relatively quick, and hydrogen production may be cheaper than by electrolysis due to lower feedstock cost. Whereas the large central steam reformers operate at elevated pressure, the smaller on-site steam reformers typically produce hydrogen below 0.8 MPa so mechanical compression is again needed, and this is an energy-demanding part of the process.

The overall energy cost of hydrogen production for vehicular propulsion must be considered carefully, as it would make no sense to produce the required hydrogen at an energy cost that exceeds the status quo energy cost of using, for example, gasoline for vehicular propulsion. Whilst some energy savings may be achieved through high volume hydrogen production plants (in the case of industrial steam reforming), if on-site hydrogen production is necessary in the absence of hydrogen distribution and supply networks, smaller scale hydrogen production also needs to benefit from energy savings.

One component which has been introduced to bring about some energy saving to smaller scale hydrogen production is the fuel cell. One type of fuel cell uses hydrogen to produce electricity. Combining a hydrogen consuming component to a hydrogen production process may on the face of it seem counter-intuitive, but the electricity and/or the heat produced by the fuel cell may be supplied to an electrolysis apparatus, or to a compression apparatus.

For example, US20060068248 describes an electrochemical system for the direct conversion of carbonaceous fuel into electrical energy and/or pure hydrogen, comprising at least two solid oxide fuel cell stack assemblies in communication with each other, and with a compressor, which in turn compresses the hydrogen produced by the system. Although US20060068248 states that such compressor may be 'any compressor standard in the art', the examples given therein limit this to multistage electromechanical units and hydride thermochemical systems.

US20080057359A1 discloses a flexible fuel cell system that is configured to handle multiple fuels.

US20100266923A1 discloses the operation of fuel cell systems that include electrochemical hydrogen pumps.

US20080292921A1 discloses a method for inhibiting start-stop degradation and humidifying a hydrogen fuel in a fuel cell assembly.

US20040013923A1 discloses electrochemical cell systems and the storage and recovery of energy from a renewable power source.

Further, US7482078 describes a high temperature electrochemical system, such as a solid oxide fuel cell system, which generates hydrogen and optionally electricity in a fuel cell mode. At least a part of the generated hydrogen is separated and stored or provided to a hydrogen using device. A solid oxide regenerative fuel cell system stores carbon dioxide in a fuel cell mode. The system generates a methane fuel in an electrolysis mode from the stored carbon dioxide and water by using a Sabatier subsystem. Alternatively, the system generates a hydrogen fuel in an electrolysis mode from water alone. The system of the first preferred embodiment described therein generates a hydrogen rich exhaust stream using reforming reactions that occur within the fuel cell stack and/or in a reformer in thermal integration with the fuel cell stack. The patent further describes that, if desired, a small amount of power may be generated and used internally within the system, such as to keep the system at operating temperature and to power system components in addition to other parasitic loads in the system.

In the process or the systems of US7482078, although electricity produced by the fuel cell is used for the electrolysis step, or heat from the fuel cell is used for the reforming step, there has been no attempt to address the energy intensive step of hydrogen compression, which would be necessary if such systems are to be deployed as on-site hydrogen production systems in hydrogen refuelling stations.

The inventors have therefore sought to address energy integration in the process for the production of compressed hydrogen, such that high pressure high purity hydrogen suitable for refuelling hydrogen-utilising vehicles can be produced with increased energy efficiency.

### Summary of the Invention

Accordingly, the present invention provides a process for the production of compressed hydrogen gas from a feedstream comprising methane according to claim 1.

The present invention also provides an apparatus for the production of compressed hydrogen according to claim 2.

The inventor of the present invention has surprisingly found that energy losses and inefficiencies encountered during the production of high pressure hydrogen by reforming and/or by electrolysis may be minimised firstly by integration of the reforming reaction within the fuel cell, secondly by integrating into the system an electrochemical device that combines hydrogen purification and hydrogen compression, and thirdly by directly using at least a portion of the electricity produced by the fuel cell to at least partially power the electrochemical device, such that energy losses encountered during the conversion of direct current (DC) to alternating current (AC), then back to DC (which would otherwise be needed) for use by the electrochemical device are eliminated.

### Brief Description of the Drawings

Figure 1 shows a simplified schematic diagram of the apparatus according to the invention.
Figure 2 shows a simplified schematic diagram of an embodiment of the apparatus according to the invention, which carries out an embodiment of the process according to the invention.

### Detailed Description of the Invention

In the present invention, a solid oxide fuel cell is used to produce hydrogen from a feedstream comprising methane, as well as to produce electricity to at least partially power an electrochemical device, and optionally an electrolysis apparatus.

Suitably, the solid oxide fuel cell comprises an electrolyte, sandwiched between an anode (positive electrode) and a cathode (negative electrode), such that a surface of the electrolyte is attached to/in tight contact with a surface of the anode, and the surface of the electrolyte which is opposite to the anode-contacting surface is in tight contact with a surface of the cathode. Such assemblies can be arranged as tubular structure, or as flat plates. Typically solid oxide fuel cells comprise multiple assemblies, to enable it to have the required processing capacity.

The solid oxide fuel cell also comprises an anode chamber, and a cathode chamber. The non-electrolyte facing surface of the anode is exposed to the anode chamber, and the non-electrolyte facing surface of the cathode is exposed to the cathode chamber. The function of both the anode chamber and the cathode chamber is to enable gases introduced from outside of the solid oxide fuel cell to access the non-electrolyte facing surface of each respective electrode, and may take any suitable form, such as channels or groove (as two non-limiting examples) or any other suitable cavity, depending on whether the anode-electrolyte-cathode assemblies are tubular structures, or flat plates.

Further, the anode chamber and the cathode chamber are distinct compartments because the solid oxide fuel cell is sealed during its construction such that no substance can pass from the anode chamber to the cathode chamber, and vice versa (other than the oxygen ions which pass through the electrolyte; see below).

The electrolyte forms an integral part of this seal, however the electrolyte has the special property that it is permeable to oxygen ions, which are produced by the cathode from an oxygen containing input stream.

Suitably, the electrolyte is a solid layer, and may comprises a metal oxide (of calcium or zirconium) stabilised with yttrium oxide to form a hard ceramic-like compound. Such compounds are referred in the art as yttria-stabilised zirconium, or abbreviated to 'YSZ'. Alternatively, the electrolyte may comprise any other material and/or compounds known in the art.

At least one inlet of the solid oxide fuel cell enables the supply of the oxygen-containing input stream to enter into the cathode chamber, either continuously or intermittently. Suitably, the rate of such supply may be adjusted by the operators of the process of the present invention, as needed in the circumstances to regulate electricity production by the solid oxide fuel cell. The oxygen-containing input stream may be any gas stream containing oxygen. Suitably, the oxygen-containing input stream is air. At the cathode, the oxygen from such stream diffuses through the gas permeable cathode, and takes up electrons (i.e. is reduced) to form oxygen ions (O²⁻)_{.}

At least one inlet of the solid oxide fuel cell enables the supply of a feedstream comprising methane to enter into the anode chamber from the outside. At least another inlet also enables the supply of a steam stream into the anode chamber. Suitably, feedstream comprising methane and the steam stream may be supplied together into the anode chamber via the same inlet.

Suitably, in the process of the present invention, the solid oxide fuel cell has at least two functions, one function is to convert the feedstream comprising methane to a product mixture comprising hydrogen, and the other function is to generate electricity from the at least a portion of the product mixture comprising hydrogen.

In the present invention, suitably, one of the functions of the solid oxide fuel cell is to convert the feedstream comprising methane to a product mixture comprising hydrogen.

Preferably, the methane content of the feedstream comprising methane is at least 95 %vol. methane, more preferably at least 98 %vol. methane, even more preferably at least 99.9 %vol. methane, and most preferably at least 100 ovol. methane.

Suitably, the feedstream comprising methane may be supplied to the solid oxide fuel cell from a storage vessel which stores and dispenses methane.

Alternatively, or in addition, suitably the feedstream comprising methane may be generated from the decomposition of biomass, in any way known to the skilled person, and then supplied to the solid oxide fuel cell, either directly, or via a storage vessel.

Alternatively, or in addition, the feedstream comprising methane may be derived from natural gas, which in most locations has the advantage of its availability from the natural gas supply network.

The composition of natural gas is, firstly dependent on where it is produced, and secondly dependent on the local regulations where it is supplied to the consumer. However, in general, the principal component of natural gas is methane. Natural gas also comprises lesser amounts of higher hydrocarbons at varying proportions, such as ethane, propane, butane and pentane.

Suitably, in the process of the present invention, it is preferable to remove such higher hydrocarbons from the natural gas, in particular as such hydrocarbons are more susceptible to 'coking' (carbon residue formation) at elevated temperatures, such as at the operating temperature range of solid oxide fuel cells.

The presence of such higher hydrocarbons may be reduced by subjecting the natural gas to a pre-step of partial reforming in the absence of oxygen. Such reforming is carried out in a manner known in the art, and its conditions may be adjusted so that the higher hydrocarbons are converted to methane, as well as some amounts of carbon monoxide and hydrogen. Suitably such product stream may be the feedstream comprising methane.

The solid oxide fuel cell has at least one inlet via which the feedstream comprising methane and the steam stream are supplied, either continuously or intermittently, into the anode chamber of the solid oxide fuel cell. Suitably, the rate of such supply may be adjusted by the operators of the process of the present invention, as needed in the circumstances to regulate hydrogen and/or electricity production by the solid oxide fuel cell.

In the anode chamber, the feedstream comprising methane and the steam stream interact with the anode to form a product mixture comprising hydrogen.

Suitably, the anode of the solid oxide fuel cell comprises a nickel/yttria stabilised zirconia (`Ni/YST'), a ceramic-metal (`cermet') mixture. The yttria stabilised zirconia has a mesh-like structure, which is porous to gases. Suitably, the mesh-like structure of the yttria stabilised zirconia supports at least one element from groups 8, 9, 10 and 11 of the periodic table. Suitably, the supported at least one element may be selected from a group consisting of nickel, cobalt or ruthenium. More suitably, the supported at least one element is nickel.

Suitably, the supported at least one element may be a reforming catalyst composition. Suitably, the reforming catalyst composition comprises at least one element from groups 8, 9, 10 and 11 of the periodic table.

Suitably, such at least one element may be selected from a group consisting of nickel, platinum, palladium, rhodium, iridium, gold, osmium and ruthenium, or combinations thereof. Suitably, such at least one element may be in a metallic state, or in the form of a complex, alloy or a compound.

Suitably, the solid oxide fuel cell operates at a temperature between about 750°C and 1100°C. More preferably, the solid oxide fuel cell operates at least at a temperature of 800°C, even more preferably at least at 850°C, most preferably at least at 900°C. More preferably, the solid oxide fuel cell operates at most at a temperature of 1000°C, even more preferably at most at 975°C, most preferably at most at 950°C.

At a temperature within said operating temperature range, in the absence of oxygen, and in the presence of a reforming catalyst composition in the anode, the feedstream comprising methane and the steam stream undergo a steam reforming reaction in the anode chamber, to produce carbon monoxide and hydrogen.

Suitably, the steam stream is supplied in an amount which is in excess of the amount required for steam reforming to drive the carbon monoxide to undergo water-gas shift reaction in the anode chamber to form a product mixture comprising hydrogen. The product mixture comprising hydrogen comprises gaseous carbon dioxide and gaseous hydrogen.

Suitably, the above-mentioned processes are carried out at ambient pressure, or almost ambient pressure.

The process of the present invention provides the advantage of heat integration. Both the reforming reaction and the water-gas shift reactions are endothermic, and because these reaction take place at/within the anode chamber of the solid oxide fuel cell, they benefit from the operational temperature of the solid oxide fuel cell. Therefore suitably, no external heating device needs to be used in the process of the present invention.

The solid oxide fuel cell has at least one outlet to enable the evacuation of at least a portion of the product mixture comprising hydrogen from the anode chamber.

In the process of the present invention, at least a portion of the product mixture comprising hydrogen is evacuated from the anode chamber and supplied via a first line to an electrochemical device.

The electrochemical device uses electricity to separate the gaseous hydrogen component of at least a portion of the product mixture comprising hydrogen supplied to it, and accumulates gaseous hydrogen gas at pressure.

It is able to do this, firstly because the electrochemical device comprises electrodes that have embedded in them transition metal(s), such as platinum and/or ruthenium, to catalyse the dissociation of hydrogen into protons and electrons, and vice versa; and secondly because the electrochemical device comprises a proton exchange membrane as an electrolyte, which is permeable only to protons, and is not permeable to any other gaseous components.

An example of a group of materials that can function as a proton exchange membrane is fluoropolymers. Examples of such fluoropolymers are the various sulphonated tetrafluoroethylenes, which are marketed by DuPont under the trade mark 'Nafion^{®}'.

For the proton exchange membrane to work as such, it must be sandwiched between two electrodes (the anode and the cathode). Such so-called sandwiches are known in the art as membrane electrode assemblies, or abbreviated to 'MEAs'. The electrochemical device may have multiple MEAs in series to increase its capacity to purify hydrogen and to generate sufficient compression power to compress gaseous hydrogen to the required pressure.

The electrochemical device requires electricity in the form of direct current to separate gaseous hydrogen and to compress it. At least a portion of the electricity needed to power the electrochemical device is supplied by the solid oxide fuel cell. To produce electricity, at least a portion of the product mixture comprising hydrogen is consumed within the anode of the solid oxide fuel cell, at the vicinity of the anode-electrolyte boundary. There, the gaseous hydrogen component of the product mixture comprising hydrogen is catalysed by the at least one element from groups 8, 9, 10 and 11 of the periodic table component of the anode to dissociate it into protons. Such protons react with the oxygen ions flowing from the cathode, to form water and electrons.

At the cathode of the solid oxide fuel cell, the reduction of oxygen molecules to oxygen ions requires electrons. At the anode of the solid oxide fuel cell, electrons are generated. Consequently, if the anode is electrically connected to the cathode, the potential difference across the electrodes will drive the electrons along the electrical connection, and thereby a direct current is created.

In the process of the present invention, the solid oxide fuel cell is connected to the electrochemical device by a first electrical connection. At least a portion of the electricity (direct current) generated by the solid oxide fuel cell is supplied to the electrochemical device to at least partially power it.

The supply of electricity (direct current) directly from the solid oxide fuel cell to the electrochemical device, which uses direct current, avoids the energy losses encountered by DC to AC back to DC conversion which is otherwise needed if, for example, power is supplied by to the electrochemical device from the electric grid.

In the process of the present invention, suitably, the electrochemical device converts at least a portion of the product mixture comprising hydrogen to a compressed hydrogen stream. Preferably, the compressed hydrogen stream comprises at least 95 % vol. hydrogen gas, more preferably at least 98% vol. hydrogen gas, even more preferably at least 99% vol. hydrogen gas, and most preferably at least 99.99% vol. hydrogen gas. Preferably, the compressed hydrogen stream comprises at most 100 % vol. hydrogen gas.

Preferably, the pressure of the compressed hydrogen stream is at least 3 MPa, more preferably at least 15 MPa, even more preferably at least 40 MPa, and most preferably at least 70 MPa.

In the process of the present invention, suitably, at least a portion of the compressed hydrogen stream is supplied, either continuously or intermittently, to either a hydrogen end-user, or to a storage unit. Suitably, the hydrogen end-user may be any entity that receives the compressed hydrogen stream as it is being produced for its immediate or later consumption.

Suitably, the compressed hydrogen stream may be supplied, either continuously or intermittently, to a storage unit. The storage unit may be one or more immobile units (such as storage tank(s) of a refuelling station, to be dispensed at a later time), or one or more fuel tanks of vehicles (to fuel their propulsion), or one or more compressed gas storage cylinders (for other uses) .

The present invention also provides an apparatus for the production of a compressed hydrogen stream comprising a solid oxide fuel cell and an electrochemical device.

The solid oxide fuel cell comprises an anode, one side of which is exposed to an anode chamber of the solid oxide fuel and the other side of which is attached to an electrolyte; and a cathode, one side of which is attached to a cathode chamber the solid oxide fuel and the other side of which is exposed to the electrolyte.

The anode chamber has at least one an inlet for receiving a feedstream comprising methane and at least another inlet to receive a steam stream, although they may be supplied together via a single inlet.

The solid oxide fuel cell is capable of reforming at its anode the feedstream comprising methane to produce a product mixture comprising hydrogen. The solid oxide fuel cell is capable of reforming because its anode comprises a reforming catalyst composition.

At least a portion of the product mixture comprising hydrogen is supplied to the electrochemical device by a first line.

The electrochemical device capable of separating gaseous hydrogen from at least a portion of the product mixture comprising hydrogen, and compressing it, to produce a compressed hydrogen stream. Via a second line, either temporarily or continuously, the compressed hydrogen stream is supplied to at least one hydrogen end-user and/or at least one storage unit.

The at least one storage unit may be one or more immobile units, or one or more fuel tanks of vehicles, or one or more compressed gas storage cylinders.

The solid oxide fuel cell is also capable of generating electricity from at least a portion of the product mixture comprising hydrogen. To generate electricity, the solid oxide fuel cell is capable of taking up into the cathode chamber an oxygen-containing input stream through at least one inlet, and it is capable of using at least a portion of the product mixture comprising hydrogen.

The reforming capacity of the solid oxide fuel cell is separate from the electricity production capacity of the solid oxide fuel cell, as the former is based primarily on the activity of the reforming catalyst composition of the solid oxide fuel cell, and the latter is based on factors such as the capacity of the anode to dissociate hydrogen molecules into protons, the capacity of the cathode to reduce oxygen molecules into oxygen ions etc. This enables the apparatus of the present invention to be supplied with the feedstream comprising methane in quantities in excess of the amount needed just for the maximum electricity generation capacity of the solid oxide fuel cell, because by doing so, the quantity of the product mixture comprising hydrogen can be maximised, as an important function of the apparatus of the present invention is the production hydrogen gas for refuelling hydrogen-utilising vehicles.

A first electrical connection connects the solid oxide fuel cell to the electrochemical device, to enable at least a portion of the electricity produced by the solid oxide fuel cell to be supplied to the electrochemical device to at least partially power it.

In an embodiment of the apparatus of the present invention, the solid oxide fuel cell is connected to an electrolysis apparatus by a second electrical connection to at least partially power an electrolysis apparatus with at least a portion of the electricity it produces.

Using such electricity, and from an input of water, the electrolysis apparatus is capable of producing an output stream comprising hydrogen and an output stream comprising oxygen.

The electrolysis apparatus is capable of supplying the output stream via a third line to the electrochemical device, for it to produce the compressed hydrogen stream.

In the process of the present invention, the operator of the process is able to adjust the apparatus of the present invention such that the process may favour hydrogen production, or favour electricity generation. Suitably this may be achieved by, for example, reducing the supply of the oxygen-containing input stream. When such stream is unlimited, maximum amount of electricity may be produced, being always subject to the amount of gaseous hydrogen available at the anode. If the oxygen-containing input stream is limited then electricity production will diminish.

The advantage of the apparatus of the present invention is derived from, in part, the internal use of the DC electricity, to at least partially power the electrochemical device and to at least partially power the electrolysis apparatus, as well as the integration of the solid oxide fuel cell with the electrochemical device and the electrolysis apparatus as a single operating unit. These two features provide energy savings, such that the energy demand/requirement of the hydrogen compression step (i.e. the production of the compressed hydrogen stream) is offset by, firstly, having no DC-AC-DC conversion steps, and secondly, the integration of the hydrogen compression step with the hydrogen separation step by use of an electrochemical device. The electrical integration of the electrolysis apparatus with the solid oxide fuel cell/electrochemical device combination means that any surplus electricity can be used to at least partially power the electrolysis apparatus to produce additional hydrogen. Further, the integration of the reforming reaction within the fuel cell integrates heat use. Thereby the present invention provides an advantageous process to produce hydrogen gas for supplying hydrogen-utilising vehicles at retail sites.

### Example

Around 130 kW per hour of feed gas (i.e. the feedstream comprising methane) is supplied to a solid oxide fuel cell capable of reforming the feedstream comprising methane.

Using such amount of the feedstream comprising methane, the solid oxide fuel cell produces around 2.1 kg of gaseous hydrogen per hour within a product mixture comprising hydrogen, at 1 bar, and generates around 42 kW of DC electricity.

Such amount of hydrogen, and around 10% of the DC electricity, is then supplied to an electrochemical device, which uses the DC electricity to separate the hydrogen from the product mixture comprising hydrogen, and compresses it to around 30 bar, to produce a compressed hydrogen stream.

The remaining approximately 90% of DC electricity generated by the solid oxide fuel cell is supplied to power an electrolysis apparatus to produce from water an output stream comprising hydrogen containing about 0.7 kg of hydrogen per hour. The output stream comprising hydrogen is supplied to the electrochemical device to produce additional compressed hydrogen stream.

The combined compressed hydrogen stream is stored in a storage unit before being used to refuel hydrogen-utilising vehicles.

### Detailed Description of the Drawings

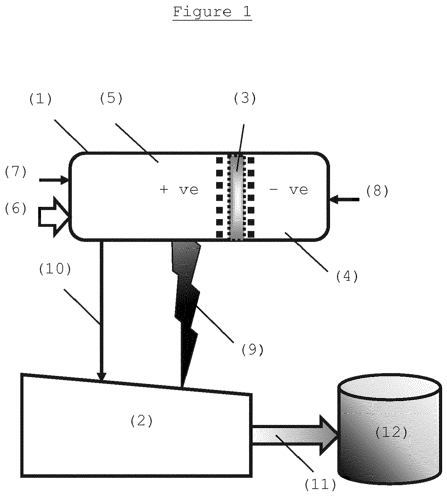

Figure 1 shows a simplified schematic diagram of the apparatus according to the invention, which carries out the process according to the invention. The apparatus comprises a solid oxide fuel cell (1) and an electrochemical device (2).

The solid oxide fuel cell comprises an electrolyte (3), sandwiched between an anode (+ve) electrode and a cathode (-ve) electrode.

One surface of the cathode is in contact with the electrolyte, and its opposite surface is exposed to a cathode chamber (4) of the solid oxide fuel cell.

One surface of the anode is in contact with the electrolyte, and its opposite surface is exposed to an anode chamber (5) of the solid oxide fuel cell.

The solid oxide fuel cell has at least one inlet via which a feedstream comprising methane (6) and a steam stream (7) are supplied to the anode chamber of the solid oxide fuel cell.

The solid oxide fuel cell has at least another inlet via which an oxygen-containing input stream (8) is supplied to the cathode chamber of the solid oxide fuel cell.

At the anode, the feedstream comprising methane and the steam stream react together in the presence of a reforming catalyst composition, and are converted to a product mixture comprising hydrogen.

At least a portion of the product mixture comprising hydrogen is evacuated from the anode chamber of the solid oxide fuel cell, and is supplied via a first line (10) to the electrochemical device (2).

At the cathode, oxygen-containing input stream is converted to oxygen ions, which flow towards the anode thorough the electrolyte. No other substance can flow through the electrolyte.

At the anode, at least a portion of the product mixture comprising hydrogen is converted to protons, which then combine with the oxygen ions flowing from the cathode, to form water and electricity (9).

Simultaneously, at least a portion of the electricity (9) is supplied from the solid oxide fuel cell (1) to the electrochemical device (2) to at least partially power the electrochemical device.

Using at least a portion of the electricity to at least partially power it, the electrochemical device extracts hydrogen from the product mixture, and compresses it, to produce a compressed hydrogen stream (11) .

Either continuously, or intermittently, at least a portion of the compressed hydrogen stream is supplied via a second line to at least one hydrogen end-user and/or at least one storage unit (12).

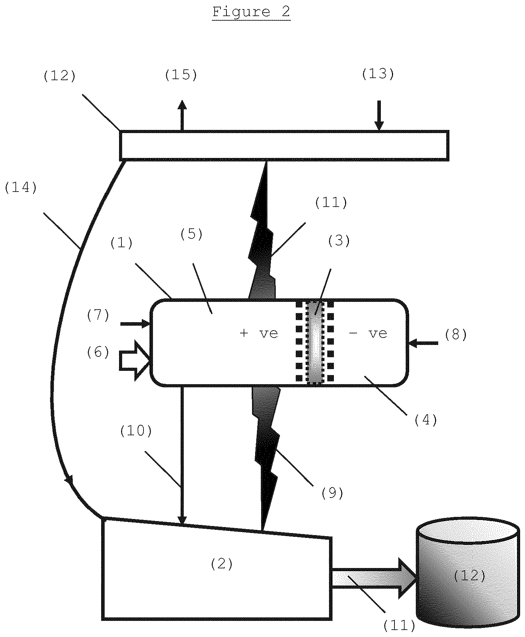

Figure 2 shows a simplified schematic diagram of an embodiment of the apparatus according to the invention, which carries out an embodiment of the process according to the invention. The figure builds upon the apparatus depicted in Figure 1, and the features numbered 1 to 12 in Figure 2 depict the same features as in Figure 1.

In this depicted embodiment, at least a portion of the electricity (11) produced by the solid oxide fuel cell (1) is supplied to an electrolysis apparatus (12) to at least partially power it.

Using an input stream of water (13) and at least a portion the electricity supplied from the solid oxide fuel cell, the electrolysis apparatus produces an output stream comprising hydrogen (14) and an output stream comprising oxygen (15).

At least a portion of the output stream comprising hydrogen (14) is conveyed, either continuously, or intermittently, via a third line to the electrochemical device (2).

Either continuously, or intermittently, at least a portion of the compressed hydrogen stream is supplied to at least one hydrogen end-user and/or at least one storage unit (12).

## Claims

1. A process for the production of compressed hydrogen gas from a feedstream comprising methane, comprising the steps of:
(a) supplying the feedstream comprising methane and a steam stream to a solid oxide fuel cell wherein a reforming catalyst composition at the anode of the solid oxide fuel cell catalyses the generation of a product mixture comprising hydrogen;
(b) generating electricity using the solid oxide fuel cell from at least a portion of the product mixture comprising hydrogen;
(c) supplying at least a portion of the electricity generated by the solid oxide fuel cell to at least partially power an electrochemical device capable of extracting gaseous hydrogen and compressing it;
(d) supplying at least a portion of the product mixture comprising hydrogen to the electrochemical device, for it to produce a compressed hydrogen stream; and
(e) supplying, either continuously or intermittently, at least a portion of the compressed hydrogen stream to at least one hydrogen end-user and/or at least one storage unit,
wherein at least another portion of the electricity generated by the solid oxide fuel cell is supplied to an electrolysis apparatus to at least partially power the electrolysis apparatus,
wherein the electrolysis apparatus produces an output stream comprising hydrogen from an intake of water and at least a portion of electricity produced by the solid oxide fuel cell.

2. An apparatus for the production of compressed hydrogen, comprising:
(a) a solid oxide fuel cell having: (i) an anode, one side of which is exposed to an anode chamber of the solid oxide fuel cell and the other side of which is attached to an electrolyte; and (ii) a cathode, one side of which is attached to a cathode chamber of the solid oxide fuel cell and the other side of which is attached to the electrolyte; and
(b) an electrochemical device capable of extracting gaseous hydrogen and compressing it to produce a compressed hydrogen stream;
wherein the anode comprises a reforming catalyst composition comprising at least one element from groups 8, 9, 10 and 11 of the periodic table;
wherein the solid oxide fuel cell has at least one inlet for accepting a feedstream comprising methane and a steam stream into the anode chamber, and at least another inlet for accepting an oxygen-containing input stream into the cathode chamber;
wherein the anode is capable of generating a product mixture comprising hydrogen from the feedstream comprising methane and the steam stream;
wherein the solid oxide fuel cell is capable of generating electricity from at least a portion of the product mixture comprising hydrogen;
wherein the solid oxide fuel cell is connected to the electrochemical device by a first electrical connection to at least partially power the electrochemical device with at least a portion of the electricity it produces;
wherein a first line supplies at least a portion of the product mixture comprising hydrogen from the solid oxide fuel cell to the electrochemical device;
wherein the electrochemical device has an outlet connected to a second line to discharge the compressed hydrogen stream, either temporarily, or continuously to at least one hydrogen end-user and/or to at least one storage unit,
wherein the solid oxide fuel cell is connected to an electrolysis apparatus by a second electrical connection to at least partially power the electrolysis apparatus with at least a portion of the electricity it produces,
wherein the electrolysis apparatus is capable of producing an output stream comprising hydrogen from an intake of water and at least a portion of electricity produced by the solid oxide fuel cell.

3. An apparatus claimed in Claims 2, wherein the electrolysis apparatus has an outlet connected by a third line to the electrochemical device, said line capable of supplying, either continuously or intermittently, at least a portion of the output stream comprising hydrogen to the electrochemical device to produce a compressed hydrogen stream.

## Patentansprüche

1. Verfahren für die Produktion von komprimiertem Wasserstoffgas aus einem Speisestrom, umfassend Methan, umfassend die Schritte:
(a) Zuführen des Speisestroms, umfassend Methan und einen Dampfstrom, zu einer Festoxid-Brennstoffzelle, wobei eine Reformierkatalysatorzusammensetzung an der Anode der Festoxid-Brennstoffzelle die Erzeugung einer Produktmischung katalysiert, umfassend Wasserstoff;
(b) Erzeugen von Elektrizität unter Verwendung der Festoxid-Brennstoffzelle aus mindestens einem Anteil der Produktmischung, umfassend Wasserstoff;
(c) Zuführen mindestens eines Anteils der Elektrizität, die durch die Festoxid-Brennstoffzelle erzeugt wird, um mindestens teilweise eine elektrochemische Vorrichtung mit Strom zu versorgen, die in der Lage ist, gasförmigen Wasserstoff zu extrahieren und ihn zu komprimieren;
(d) Zuführen mindestens eines Anteils der Produktmischung, umfassend Wasserstoff, an die elektrochemische Vorrichtung, damit sie einen komprimierten Wasserstoffstrom produziert; und
(e) Zuführen, entweder kontinuierlich oder intermittierend, mindestens eines Anteils des komprimierten Wasserstoffstroms zu mindestens einem Wasserstoffendbenutzer und/oder mindestens einer Speichereinheit,
wobei mindestens ein anderer Anteil der Elektrizität, die durch die Festoxid-Brennstoffzelle erzeugt wird, einer Elektrolyseeinrichtung zugeführt wird, um die Elektrolyseeinrichtung mindestens teilweise mit Strom zu versorgen,
wobei die Elektrolyseeinrichtung einen Ausgangsstrom produziert, umfassend Wasserstoff aus einer Wasseraufnahme und mindestens einem Anteil von Elektrizität, die durch die Festoxid-Brennstoffzelle produziert wird.

2. Einrichtung für die Produktion von komprimiertem Wasserstoff, umfassend:
(a) eine Festoxid-Brennstoffzelle, die aufweist: (i) eine Anode, von der eine Seite einer Anodenkammer der Festoxid-Brennstoffzelle ausgesetzt ist und die andere Seite an einem Elektrolyten angebracht ist; und (ii) eine Kathode, von der eine Seite an einer Kathodenkammer der Festoxid-Brennstoffzelle angebracht ist und die andere Seite an dem Elektrolyten angebracht ist; und
(b) eine elektrochemische Vorrichtung, die in der Lage ist, gasförmigen Wasserstoff zu extrahieren und ihn zu komprimieren, um einen komprimierten Wasserstoffstrom zu produzieren;
wobei die Anode eine Reformierkatalysatorzusammensetzung umfasst, umfassend mindestens ein Element aus den Gruppen 8, 9, 10 und 11 des Periodensystems;
wobei die Festoxid-Brennstoffzelle mindestens einen Einlass zum Annehmen eines Speisestroms aufweist, umfassend Methan und einen Dampfstrom in die Anodenkammer, und mindestens ein anderer Einlass zum Annehmen eines sauerstoffhaltigen Eingangsstroms in die Kathodenkammer;
wobei die Anode in der Lage ist, eine Produktmischung zu erzeugen, umfassend Wasserstoff aus dem Speisestrom, umfassend Methan und den Dampfstrom; wobei die Festoxid-Brennstoffzelle in der Lage ist, Elektrizität aus mindestens einem Anteil der Produktmischung, umfassend Wasserstoff, zu erzeugen; wobei die Festoxid-Brennstoffzelle durch eine erste elektrische Verbindung mit der elektrochemischen Vorrichtung verbunden ist, um die elektrochemische Vorrichtung mindestens teilweise mit mindestens einem Anteil der Elektrizität, die sie produziert, mit Strom zu versorgen;
wobei eine erste Leitung mindestens einen Anteil der Produktmischung umfassend Wasserstoff aus der Festoxid-Brennstoffzelle zu der elektrochemischen Vorrichtung zuführt;
wobei die elektrochemische Vorrichtung einen Auslass aufweist, der mit einer zweiten Leitung verbunden ist, um den komprimierten Wasserstoffstrom entweder vorübergehend oder kontinuierlich zu mindestens einem Wasserstoffendbenutzer und/oder zu mindestens einer Speichereinheit zu entladen, wobei die Festoxid-Brennstoffzelle durch eine zweite elektrische Verbindung mit einer Elektrolyseeinrichtung verbunden ist, um die Elektrolyseeinrichtung mindestens teilweise mit mindestens einem Anteil der Elektrizität, die sie produziert, mit Strom zu versorgen, wobei die Elektrolyseeinrichtung in der Lage ist, einen Ausgangsstrom, umfassend Wasserstoff aus einer Wasseraufnahme und mindestens einen Anteil von Elektrizität zu produzieren, die durch die Festoxid-Brennstoffzelle produziert wird.

3. Einrichtung nach Anspruch 2, wobei die Elektrolyseeinrichtung einen Auslass aufweist, der durch eine dritte Leitung mit der elektrochemischen Vorrichtung verbunden ist, wobei die Leitung in der Lage ist, entweder kontinuierlich oder intermittierend mindestens einen Anteil des Ausgangsstroms, umfassend Wasserstoff an die elektrochemische Vorrichtung zuzuführen, um einen komprimierten Wasserstoffstrom zu produzieren.

## Revendications

1. Procédé de production d'hydrogène gazeux comprimé à partir d'un flux d'alimentation comprenant du méthane, comprenant les étapes consistant à :
(a) fournir le flux d'alimentation comprenant du méthane et un flux de vapeur à une pile à combustible à oxyde solide, dans lequel une composition de catalyseur de reformage à l'anode de la pile à combustible à oxyde solide catalyse la génération d'un mélange de produits comprenant de l'hydrogène ;
(b) générer de l'électricité à l'aide de la pile à combustible à oxyde solide à partir d'au moins une partie du mélange de produits comprenant de l'hydrogène ;
(c) fournir au moins une partie de l'électricité générée par la pile à combustible à oxyde solide pour alimenter au moins partiellement un dispositif électrochimique capable d'extraire de l'hydrogène gazeux et le compresser ;
(d) fournir au moins une partie du mélange de produits comprenant de l'hydrogène au dispositif électrochimique, pour qu'il produise un flux d'hydrogène comprimé ; et
(e) fournir, de manière continue ou intermittente, au moins une partie du flux d'hydrogène comprimé à au moins un utilisateur final d'hydrogène et/ou au moins à une unité de stockage,
dans lequel au moins une autre partie de l'électricité générée par la pile à combustible à oxyde solide est acheminée dans un appareil d'électrolyse pour alimenter au moins partiellement l'appareil d'électrolyse,
dans lequel l'appareil d'électrolyse produit un flux de sortie comprenant de l'hydrogène provenant d'une prise d'eau et au moins une partie de l'électricité produite par la pile à combustible à oxyde solide.

2. Appareil de production d'hydrogène comprimé, comprenant :
(a) une pile à combustible à oxyde solide comportant : (i) une anode, dont une face est exposée à une chambre anodique de la pile à combustible à oxyde solide et dont l'autre face est fixée à un électrolyte ; et (ii) une cathode, dont une face est fixée à une chambre cathodique de la pile à combustible à oxyde solide et dont l'autre face est fixée à l'électrolyte ; et
(b) un dispositif électrochimique capable d'extraire de l'hydrogène gazeux et de le comprimer pour produire un flux d'hydrogène comprimé ;
dans lequel l'anode comprend une composition de catalyseur de reformage comprenant au moins un élément des groupes 8, 9, 10 et 11 du tableau périodique ; dans lequel la pile à combustible à oxyde solide a au moins une entrée pour accepter un flux d'alimentation comprenant du méthane et un flux de vapeur dans la chambre anodique, et au moins une autre entrée pour accepter un flux d'entrée contenant de l'oxygène dans la chambre cathodique ;
dans lequel l'anode est capable de générer un mélange de produits comprenant de l'hydrogène à partir du flux d'alimentation comprenant du méthane et du flux de vapeur ;
dans lequel la pile à combustible à oxyde solide est capable de générer de l'électricité à partir d'au moins une partie du mélange de produits comprenant de l'hydrogène ;
dans lequel la pile à combustible à oxyde solide est connectée au dispositif électrochimique par une première connexion électrique afin d'alimenter au moins partiellement le dispositif électrochimique avec au moins une partie de l'électricité qu'elle produit ; dans lequel une première conduite fournit au moins une partie du mélange de produits comprenant de l'hydrogène provenant de la pile à combustible à oxyde solide au dispositif électrochimique ;
dans lequel le dispositif électrochimique a une sortie connectée à une deuxième conduite pour évacuer le flux d'hydrogène comprimé, soit temporairement, soit en continu vers au moins un utilisateur final d'hydrogène et/ou vers au moins une unité de stockage,
dans lequel la pile à combustible à oxyde solide est connectée à un appareil d'électrolyse par une seconde connexion électrique pour alimenter au moins partiellement l'appareil d'électrolyse avec au moins une partie de l'électricité qu'elle produit,
dans lequel l'appareil d'électrolyse est capable de produire un flux de sortie comprenant de l'hydrogène à partir d'une prise d'eau et d'au moins une partie de l'électricité produite par la pile à combustible à oxyde solide.

3. Appareil selon les revendications 2, dans lequel l'appareil d'électrolyse a une sortie connectée par une troisième conduite au dispositif électrochimique, ladite conduite étant capable de fournir, de manière continue ou intermittente, au moins une partie du flux de sortie comprenant de l'hydrogène au dispositif électrochimique pour produire un flux d'hydrogène comprimé.
